# EUROPEAN PATENT APPLICATION

(11) **EP 4 757 329 A1**
(43) Date of publication of application: **10.06.2026**
(21) Application number: 25220245.2
(22) Date of filing: 02.12.2025
(51) Int. Cl.: H04N 23/52, H04N 23/55, H04N 23/57

(54) **CAMERA, SENSOR UNIT AND OPTICAL FILTER ASSEMBLY**

(30) Priority: 05.12.2024 SE 2451237
(71) Applicant: Topgolf Sweden AB, 182 33 Danderyd (SE)
(72) Inventor: VAN LEER, John, 126 28 Hägersten (SE); GRUBBSTRÖM, Carl, 132 45 Saltsjö-boo (SE); FREDANDER, Bo, 197 36 Bro (SE)
(74) Representative: Noréns Patentbyrå AB

(57) **Abstract**

A camera (300) and a sensor unit (200) for mounting in the camera (300) are disclosed. The sensor unit (200) comprises a housing (210, 211) arranged to partially enclose an optical filter assembly (100). The optical filter assembly (100) comprises a mount (110) configured to receive and support an optical filter (121, 122), and a sensor gasket (127) arranged between the optical filter (121, 122) and an image sensor arrangement (130). The image sensor arrangement (130) and the sensor gasket (127) cooperate to fixate the optical filter (121, 122) relatively the mount (110). The optical filter assembly (100) comprises a first heat conducting gasket (141) arranged between the mount (110) and the image sensor arrangement (130). The housing (210) comprises a second heat conducting gasket (142) arranged between the housing (210, 211) and the mount (110).

## Description

### TECHNICAL FIELD

The embodiments herein relate to cameras, such as still image cameras, video cameras, digital cameras, or the like. In particular, a sensor unit configured to dissipate heat and a related camera are disclosed. Furthermore, an optical filter assembly for enabling improved integrity of optical filters during and/or after assembly of the optical filter assembly and a related camera are disclosed.

### BACKGROUND

Cameras, whether used for still images or video, typically include an image sensor that captures visual data. The sensor can translate optical information into a digital format, enabling the production of high-quality images and videos. During camera operation, particularly in high-performance or extended-use settings, the sensor circuitry may be exposed to elevated temperatures. Exposure to such high temperatures can degrade the performance of the sensor circuitry, potentially impacting image quality and reducing the operational life of the camera.

Furthermore, mounting optical filters in cameras can be cumbersome and time-consuming, as these filters are delicate and require careful handling. Optical filters can achieve the desired light transmission and image quality, and their sensitivity demands precision during installation to avoid damage. However, the performance of cameras that rely on optical filters may deteriorate if the filters themselves have been damaged, or become damaged, e.g., during mounting. In particular, scratches or other surface damage to the optical filters can reduce their optical performance, impacting the quality of the images produced.

### SUMMARY

A problem may thus be how to address issues related to heat management in camera systems to maintain, or improve, sensor performance.

An object is to alleviate, or eliminate, one or more of the problems and/or disadvantages mentioned herein.

According to an aspect, there is provided a sensor unit for mounting in a camera. The sensor unit comprises a housing arranged to partially enclose an optical filter assembly. The optical filter assembly comprises a mount configured to receive and support an optical filter, e.g. for filtering light passable through the optical filter, and a sensor gasket arranged between the optical filter and an image sensor arrangement. The sensor gasket is adapted to abut the optical filter and the image sensor arrangement outside a field of view of the sensor unit. The image sensor arrangement is mounted at a sensor side of the mount, whereby at least a portion of the image sensor arrangement is received by the mount. The sensor side can face the image sensor arrangement. The optical filter assembly can comprise the image sensor arrangement. The image sensor arrangement and the sensor gasket cooperate to fixate the optical filter relatively the mount and to seal a peripheral portion of an image sensor of the image sensor arrangement against the optical filter. Preferably, the peripheral portion is outside the field of view.

The optical filter assembly further comprises a first heat conducting gasket arranged between the mount and the image sensor arrangement. The first heat conducting gasket is adapted to abut the mount and the image sensor arrangement outside the field of view.

Moreover, the housing comprises a second heat conducting gasket arranged between the housing and the mount. The second heat conducting gasket is adapted to abut the housing and the mount outside the field of view.

Thanks to the first and second heat conducting gaskets, transfer of heat, generated by the image sensor arrangement, is facilitated. The heat is transferred from the image sensor arrangement to the housing via the mount. The housing, in its turn, can be cooled by an air flow running through a chassis of a camera, in which the sensor unit can be installed. As a result, the image sensor arrangement can more easily dissipate heat to the housing.

According to a further aspect, the object, and/or other objects, is achieved by a camera comprising the sensor unit according to any embodiment herein and/or an optical assembly according to any embodiment herein.

The following description of embodiments herein can be applied to one or more of the aspects above as will be apparent.

In some embodiments, the optical filter comprises a first optical filter and a second optical filter. The sensor gasket is interposed between the second optical filter and the image sensor arrangement.

In some embodiments, a spacer is arranged between the first optical filter and the second optical filter. The spacer is adapted to abut the first and second optical filters outside the field of view.

In some embodiments, the housing comprises a first housing portion and a second housing portion. As an example, the mount can comprise the second housing portion. The mount can be designed to incorporate the second housing portion in various ways. For instance, the mount could be integrated directly into the second housing portion, meaning the mount and housing portion are a single, unified structure, reducing the need for additional attachment mechanisms. Alternatively, the mount could be configured to include specific shapes or contours that, when assembled, form or complete the second housing portion. This approach allows for flexibility in design by enabling the mount to contribute to the overall structure of the housing without being a separate component.

In some embodiments, the first heat conducting gasket comprises a compressible material and/or an elastic material.

In some embodiments, the second heat conducting gasket comprises an elastic material and/or a compressible material.

In some embodiments, the image sensor arrangement comprises the image sensor and a circuit board. The circuit board can be provided with various components for interfacing with and managing the image sensor. These components can generate heat during operation of the image sensor and/or a camera comprising the sensor unit and/or the optical filter arrangement.

In some embodiments, the sensor gasket is arranged to seal a periphery of the image sensor, against the optical filter, such as the second optical filter. The periphery can refer to the peripheral portion, or a peripheral portion of the image sensor according to some examples. In this manner, a light sensitive area of the image sensor is protected from debris, such as dust, particles, moist, or the like.

In some embodiments, the spacer has at least one protrusion, extending in a main extension plane of the spacer. Said at least one protrusion can be a flap, an ear, a lug, a projecting plate, a handle, or the like.

In some embodiments, the spacer has an opening aligned with an image sensor area of an image sensor of the image sensor arrangement. The opening preferably encircles the field of view, whereby the spacer refrains from obstructing the field of view.

Thanks to said at least one protrusion, it can be ensured that the spacer is fixed in rotational position such that an opening of the spaced in aligned to maintain the field of view unobstructed.

In some embodiments, the spacer has a non-circular periphery. Again, it can be ensured that the spacer is fixed in rotational position such that an opening of the spaced in aligned to maintain the field of view unobstructed.

In some embodiments, at least one of the optical filter, the first optical filter, the second optical filter, the spacer, and the sensor gasket has a respective main extension plane that is perpendicular to a normal direction extending away from the image sensor's light sensitive area.

In some embodiments, the mount is provided with a through-hole emerging at an object side of the mount and a sensor orifice, e.g., at a sensor side, for providing an unobstructed optical path towards the image sensor or towards an image sensor of the image sensor arrangement.

In some embodiments, the image sensor arrangement comprises an image sensor and a circuit board.

In some embodiments, the optical filter, such as the first optical filter and the second optical filter, as well as the spacer, and the sensor gasket form a stacked assembly, e.g. arranged in order as mentioned directly above, e.g., with the sensor gasket closest to the image sensor arrangement and/or the image sensor.

In some embodiments, the sensor gasket is interposed between the second optical filter and the image sensor arrangement

In some embodiments, the optical filter assembly comprises a first heat conducting gasket arranged between the mount and the image sensor arrangement. The first heat conducting gasket is adapted to abut the mount and the image sensor arrangement outside the field of view. The housing comprises a second heat conducting gasket arranged between the housing and the mount. The second heat conducting gasket is adapted to abut the housing and the mount outside the field of view.

### BRIEF DESCRIPTION OF THE DRAWINGS

The various aspects of embodiments disclosed herein, including particular features and advantages thereof, will be readily understood from the following detailed description and the accompanying drawings, which are briefly described in the following.
Figure 1 is a schematic overview illustrating an example of a camera in which embodiments herein may be implemented.
Figure 2 is an exploded perspective view, illustrating an example of the sensor unit.
Figure 3 is another exploded perspective view, illustrating an example of the sensor unit.
Figure 4 is an exploded perspective view, illustrating an example of the optical filter assembly.
Figure 5 is a perspective view, illustrating an example of the mount.
Figure 6 is a cross-sectional side view, illustrating an example of the optical filter assembly.
Figure 7 is a plan view, illustrating an example where the interior of the sensor unit is visible.
Figure 8 is a plan view, illustrating an example of the image sensor arrangement.

### DETAILED DESCRIPTION

As used herein, optical filters can refer to interference filters, dichroic filters, absorptive filters, polarizing filters, bandpass filters, neutral density filter, glass filter, protective filter, shielding filter, clear filter, ultraviolet filter, longpass filters, shortpass filters, anti-reflection coated filters, beamsplitting filters, and the like.

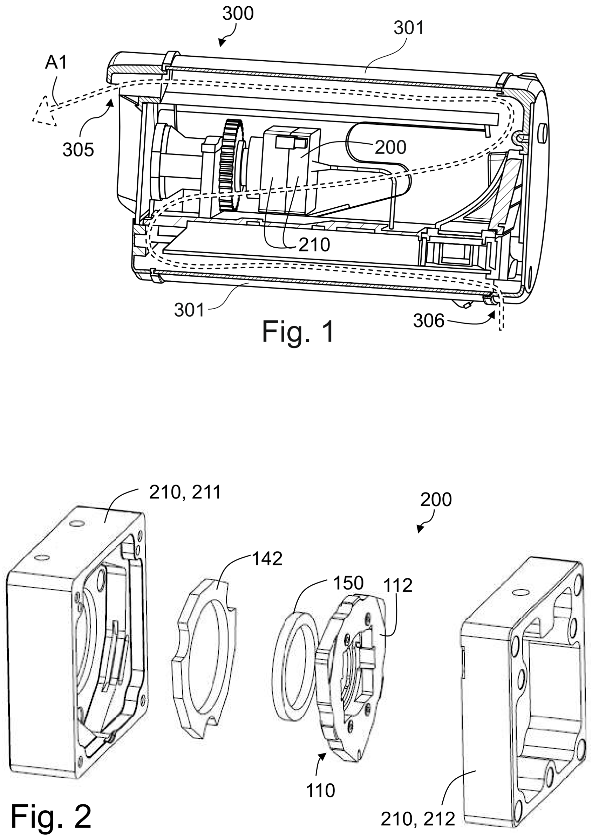

Figure 1 illustrates a camera 300, such as an imaging device, a digital camera, a still image camera, a video camera, a video recording camera, a digital imaging system, or the like.

The camera 300 includes, such as has, is provided with, or the like, a chassis 301, such as a casing, a box, an enclosure, an outer chassis, or the like, for protection against weather phenomena, such as rain, dust, moist, wind, dirt, sand, or the like.

The chassis 301 has at least a first opening 305 and a second opening 306 through which an air flow A1 passes in and out of the chassis 301. The air flow A1 can pass by, e.g., nearby, in the vicinity of, or the like, parts within the chassis 301. In particular, the parts can include a sensor unit according to embodiments herein and/or an optical filter assembly according to embodiments herein. In this manner, the camera 300 can be cooled, e.g., by the air flow A1. The air flow A1 is illustrated as passing from the second opening 306 to the first opening 305 in this example. Sometimes, the air flow A1 can pass from the first opening 305 to the second opening 306.

Inside the chassis 301, an exemplifying sensor unit 200 is located, such as arranged, mounted, or the like, e.g., directly or indirectly to the chassis 301. Expressed differently, the chassis 301 can comprise, such as at least partially enclose, house, accommodate or the like, the sensor unit 200.

The sensor unit 200 can include, such as have, be provided with, or the like, the housing 210. The housing 210 can be a casing, a box, an enclosure, or the like. The housing can be made of metal, hard plastic, or the like. The housing is preferably made of a material that is capable of conducting heat, i.e., relatively well. The material can comprise metal, hard plastic, or the like. In the housing 210, an exemplifying optical filter assembly 100 can be arranged, such as located, mounted, installed, fastened, or the like.

The sensor unit 200 includes electronics and basic optical components for providing a basic imaging unit that can be equipped with special optical components adapted for various applications, such as object tracking, tracking of sports projectiles, such as golf balls, or the like.

The optical filter assembly 100 can be configured for mounting in the camera 300, e.g., by that the optical filter assembly 100 can be received and at least partially enclosed by the chassis 301 of the camera 300. In more detail, the optical filter assembly 100 can be configured for mounting in the sensor unit 200, e.g., by that the optical filter assembly 100 can be received and at least partially enclosed by a housing 210 of the sensor unit 200. Moreover, the optical filter assembly 100 can preferably be provided with fastening members, such as screws, pins, or the like, for attachment to an interior of the chassis 301 and/or the housing 210.

Figure 2 shows an exploded perspective view, illustrating one or more examples of the sensor unit 200, which is configured for mounting in the camera 300.

The sensor unit 200 comprises the aforementioned housing 210, 211, or other examples thereof. The housing 210, 210 is arranged to partially enclose the aforementioned optical filter assembly 100, or other examples thereof.

In some embodiments, the housing 210 comprises a first housing portion 211 and a second housing portion 212. Sometimes, the mount 110 can comprise the second housing portion 212, e.g. the mount 110 can include shapes forming the second housing portion 212.

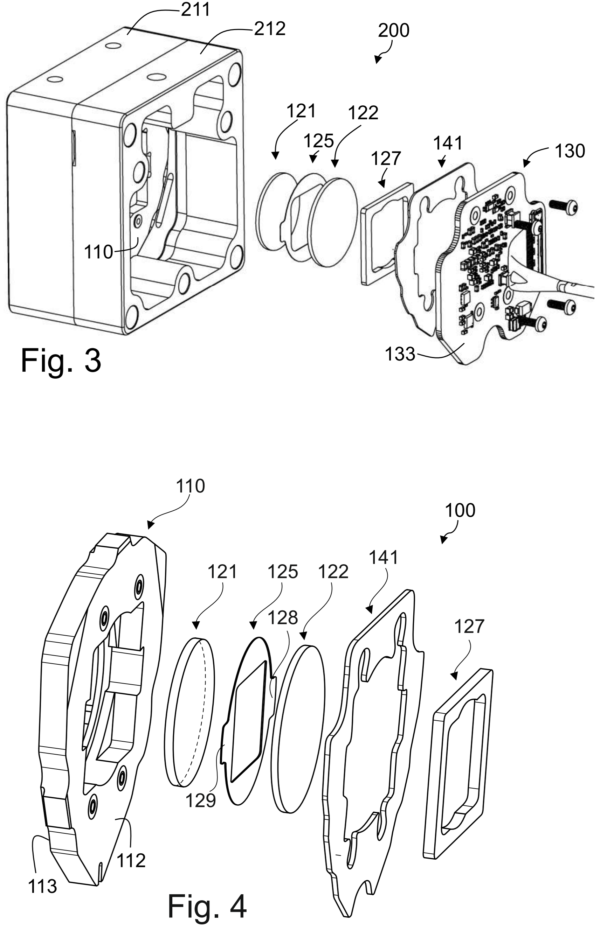

As shown in Figure 2 and Figure 3, the optical filter assembly 100 comprises a mount 110 configured to receive and support an optical filter 121, 122, e.g. for filtering light passable through the optical filter 121, 122. The optical filter 121, 122 can comprise a first optical filter 121 and/or a second optical filter 122.

A purpose of the ring 150 can be to block dust and/or dirt from reaching the sensor 131, in particular a light sensitive area of the sensor 131. The dust and/or dirt can potentially originate from the second heat conducting gasket 142.

Figure 3 further illustrates that the optical filter assembly 100 comprises a sensor gasket 127 arranged between the optical filter 121, 122, such as the second optical filter, and an image sensor arrangement 130. The sensor gasket 127 is adapted to abut the optical filter 121, 122 and the image sensor arrangement 130 outside a field of view of the sensor unit 200. In this manner, the sensor gasket 127 can be configured not to obstruct the field of view, i.e. configured to maintain a free and/or unobstructed optical path towards the image sensor 131, in particular the light sensitive area 134 of the image sensor 131.

As mentioned, the optical filter 121, 122 can comprise a first optical filter 121 and a second optical filter 122. The sensor gasket 127 is interposed between the second optical filter 122 and the image sensor arrangement 130.

Thanks to the sensor gasket 127, it is not necessary to seal and/or protect the image sensor arrangement 130, in particular the outwardly facing side of the circuit board 133 from the air flow. The air flow could potentially bring dirt and/or dust to the image sensor 131, but with the sensor gasket 127, at least a light sensitive area 134 of the image sensor 131 is protected, while at the same time the air flow can more easily cool the circuit board 133.

Turning to Figure 4, it can be seen that the image sensor arrangement 130 is mounted at a sensor side 112 of the mount 110, whereby at least a portion of the image sensor arrangement 130 is received by the mount 110.

Moreover, according to some examples, Figure 4 illustrates one or more examples of the optical filter assembly 100 configured for mounting in the camera 300.

As mentioned, the optical filter assembly 100 comprises a mount 110 configured to receive and support at least one optical filter 121, 122.

In some examples, said at least one optical filter 121, 122 comprises a first optical filter 121, e.g. for filtering, e.g. in a first manner, light passable through the first optical filter 121, and a second optical filter 122, e.g. for filtering, e.g. in a second manner, light passable through the second optical filter 122.

Moreover, the optical filter assembly 100 can comprise, such as include, or the like, a spacer 125 arranged between the first optical filter 121 and the second optical filter 122. The spacer 125 is adapted to abut the first and second optical filters 121, 122 outside a field of view of the optical filter assembly 100. In this manner, the spacer 125 is configured not to obstruct the field of view, i.e. configured to maintain a free and/or unobstructed optical path towards the image sensor, in particular towards the light sensitive area 134 of the image sensor 131.

Thanks to the spacer 125 it can be prevented that the first and second optical filters 121, 122 rub against each other, whereby scratches can occur. Thus, with the spacer 125 an improved performance of the optical assembly 100 can be obtained.

As mentioned, the optical filter assembly 100 comprises a sensor gasket 127 arranged between the second optical filter 122 and an image sensor arrangement 130. The sensor gasket 127 is adapted to abut the second optical filter 122 and the image sensor arrangement 130 outside the field of view. In this manner, the sensor gasket 127 is configured not to obstruct the field of view, i.e. configured to maintain a free and/or unobstructed optical path towards the image sensor, in particular towards the light sensitive area 134 of the image sensor.

The image sensor arrangement 130 is mounted at a sensor side 112 of the mount 110, whereby at least a portion of the image sensor arrangement 130 is received by the mount 110. The second optical filter 122 is located closer to the sensor side 112 than the first optical filter 121. The image sensor arrangement 130 and the sensor gasket 127 cooperate to fixate the first optical filter 121, the spacer 125 and the second optical filter 122 relatively the mount 110.

In some examples of the sensor unit 200, the first and second heat conducting gaskets 141, 142 convey heat from the image sensor arrangement 130. In this manner, a temperature of the image sensor arrangement 130 may not rise as much as without the first and second heat conducting gaskets 141, 142. In turn, this improves lift time of the image sensor arrangement 130. Advantages can be improved picture quality, reduced cost due to reduction of maintenance and/or repair and/or replacement of damaged part(s) after some time of use.

In some examples of the optical filter assembly, the spacer 125 maintains the positions of the first and second optical filters 121, 122. Thus, reducing a risk of scratches on the optical filters 121, 122. An advantage can be that yield of manufactured optical filter assemblies 100 is improved.

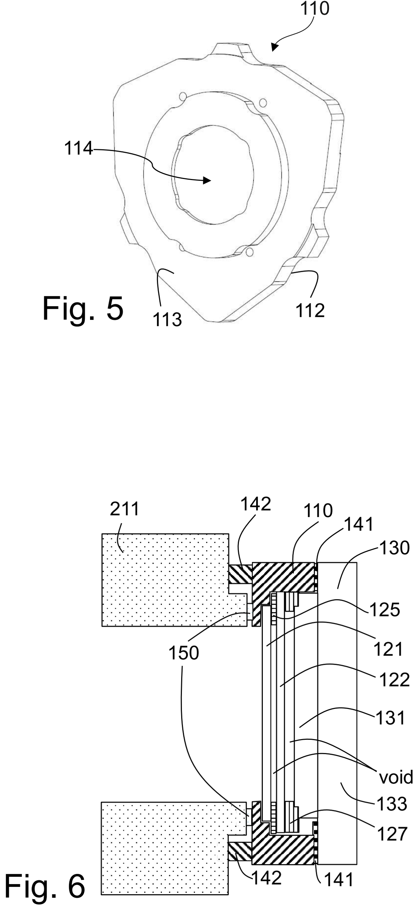

Illustrated in Figure 5, there is shown an example of the mount 110, where the object side 113 is shown. The sensor side 112 is opposite to the object side 113.

As shown in Figure 6, the image sensor arrangement 130 and the sensor gasket 127 cooperate to fixate the optical filter 121, 122 relatively the mount 110 and to seal a peripheral portion 132 of an image sensor 131 of the image sensor arrangement 130 against the optical filter 121, 122.

Preferably, the peripheral portion 132 is outside the field of view.

In the example of Figure 6, the optical filter 121, 122 includes the first and second optical filters 121, 122. In other examples, the optical filter 121, 122, e.g., a single optical filter, can be used. In such cases, the spacer 125 can be omitted.

Furthermore, the optical filter assembly 100 comprises a first heat conducting gasket 141 arranged between the mount 110 and the image sensor arrangement 130. The first heat conducting gasket 141 is adapted to abut the mount 110 and the image sensor arrangement 130 outside the field of view. In this manner, the first heat conducting gasket 141 is configured not to obstruct the field of view, i.e. maintain a free and/or unobstructed optical path towards the image sensor, in particular towards the light sensitive area 134 of the image sensor 131.

In some embodiments, a spacer 125 is arranged between the first optical filter 121 and the second optical filter 122. The spacer 125 is adapted to abut the first and second optical filters 121, 122 outside the field of view.

Moreover, the housing 210 comprises a second heat conducting gasket 142 arranged between the housing 210 and the mount 110. The second heat conducting gasket 142 is adapted to abut the housing 210, 211 and the mount 110 outside the field of view.

In this manner, the second heat conducting gasket 142 is configured not to obstruct the field of view, i.e. configured to maintain a free and/or unobstructed optical path towards the image sensor, in particular towards the light sensitive area 134 of the image sensor 131.

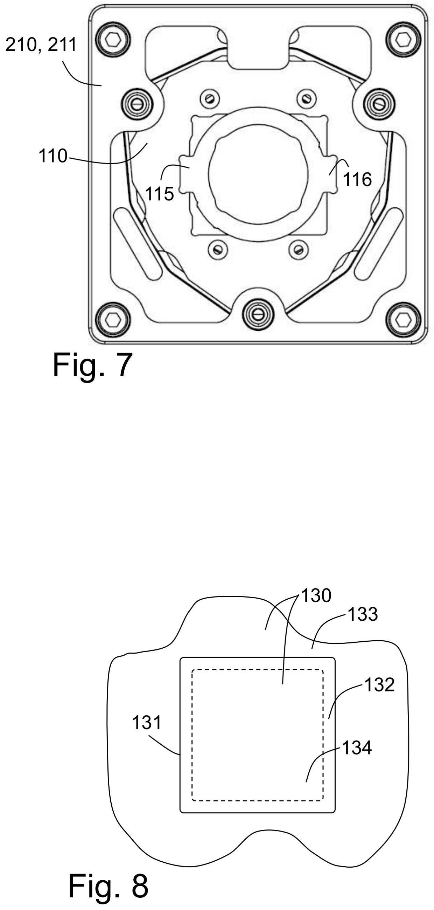

In Figure 7, a plan view illustrates the housing 210, 211, in which the optical filter assembly 100 is installed. The optical filter assembly 100 includes one or more excavations 115, 116 adapted to receive said at least one protrusion 128, 129 of the spacer 125. In this manner, it is ensured that the spacer 125 is held in a rotational angle in which the space maintains an unobstructed, or free, field of view towards the image sensor 131. The rotational angle can be defined relative to an axis that is parallel to a normal axis of a main extension plane of the mount. The rotation angle thus indicates rotation orientation about said axis. Furthermore, the rotational angle can be defined in a plane that is perpendicular an optical path towards the image sensor 131.

Figure 8 illustrates that the image sensor arrangement 130 can comprise the image sensor 131 and a circuit board 133.

In some embodiments, the sensor gasket 127 is arranged to seal the peripheral portion 132 against the optical filter 121, 122, such as the second optical filter 122.

In some embodiments, the spacer 125 has at least one protrusion 128, 129, extending in a main extension plane of the spacer 125, such as a flap, an ear, a lug, a projecting plate, a handle, or the like.

In some embodiments, the spacer 125 has a non-circular periphery. An order of rotational symmetry of the spacer 125 can be 1, 2, 4, or the like as long as the field of view remains unobstructed for the intended mounting position.

In some embodiments, the spacer 125 has an opening aligned with an image sensor area of an image sensor 131 of the image sensor arrangement 130. The opening preferably encircles the field of view.

As an example, an outer contour of the image sensor 131 is surrounded by the opening's inner outline, such as contour or the like.

In some embodiments, at least one of the first optical filter 121, the second optical filter 122, as well as the spacer 125, and the sensor gasket 127 has a respective main extension plane that is perpendicular to a normal direction extending away from the image sensor's 131 light sensitive area.

In some embodiments, the mount 110 is provided with a through-hole 114 emerging at an object side 113 of the mount 110 and a sensor side 112 of the mount 110 for providing an unobstructed optical path towards the image sensor 131 of the image sensor arrangement 130.

In some embodiments, the first optical filter 121, the second optical filter 122, the spacer 125, and the sensor gasket 127 form a stacked assembly 120, e.g. arranged in order as mentioned directly above, e.g., with the sensor gasket 127 closest to the image sensor 131.

In some embodiments, the sensor gasket 127 is arranged to seal a peripheral portion 132 of the image sensor 131 against the optical filter 121, 122, such as the second optical filter 122.

In examples, when the optical filter assembly 100 is included in the sensor unit 200, the optical filter assembly 100 comprises a first heat conducting gasket 141 arranged between the mount 110 and the image sensor arrangement 130. The first heat conducting gasket 141 is adapted to abut the mount 110 and the image sensor arrangement 130 outside the field of view.

The housing 210 comprises a second heat conducting gasket 142 arranged between the housing 210 and the mount 110. The second heat conducting gasket 142 is adapted to abut the housing 210, 211 and the mount 110 outside the field of view.

It can be preferred that all pixels of the image sensor 131 are inside the field of view, but it is not strictly necessary. For example, a selection of adjacent pixels, e.g., within a rectangle or the like on the light sensitive surface can be chosen as relevant area for defining the field of view. Accordingly, a portion of the light sensitive area 134 can be chosen as relevant for the field of view, if desired.

In some embodiments, the first heat conducting gasket 141 comprises a compressible material.

The compressible material can also have suitable properties for conducting heat.

The compressible material herein can have a thermal conductivity of about 3.6 W/m-K, in a range of 3-4 W/m-K, in a range of 2-5 W/m-K, or the like. Furthermore, a hardness shore A can be about 90, in a range of 80-100, in a range of 70-110, or the like.

The compressible material herein can comprise, or be, an elastomer, a rubber, a soft plastic, and/or the like.

In some embodiments, the second heat conducting gasket 142 comprises an elastic material.

The elastic material can also have suitable properties for conducting heat.

The elastic material herein can have a thermal conductivity of about 1.1. W/m-K, in a range of 0.5-1.5 W/m-K, 0.3-2.0 W/m-K, or the like.

Furthermore, a shore A of the elastic material can be 142, in a range of 130-150, in a range of 120-160, or the like.

In some embodiments, the spacer 125 is made of a sheet of matte plastic, or other suitable material with similar properties. Preferably, the spacer 125 is black. The spacer's 125 material is chosen such as to cause as little reflection as possible, preferably no reflections.

In some embodiments, the ring 150 can comprise, such as be made of, or the like, an elastic foam.

In some embodiments, the sensor gasket 127 comprises, such as is made of, or the like, an elastic silicon material.

The sensor gasket 127 can have a shore A of about 40, in a range of 35-45, in a range of 30-40, or the like. A purpose of the sensor gasket 127 can be to keep dust and/or dirt away from the sensor 131, in more detail away from the light sensitive area of the sensor 131.

As used herein, a set of items refers to one or more items.

Any feature disclosed for one example and/or embodiment may be combined with one or more features disclosed for one or more other examples and/or embodiments without departing from the scope herein.

### EXAMPLES

Although the present application is defined in the attached claims, it should be understood that the present invention can also be (alternatively) defined in accordance with the following examples:
Example 1: A sensor unit (200) for mounting in a camera (300), wherein
   the sensor unit (200) comprises:
      a housing (210, 211) arranged to partially enclose an optical filter assembly (100), wherein the optical filter assembly (100) comprises
      a mount (110) configured to receive and support
         an optical filter (121, 122), and
         a sensor gasket (127) arranged between the optical filter (121, 122) and an image sensor arrangement (130), wherein the sensor gasket (127) is adapted to abut the optical filter (121, 122) and the image sensor arrangement (130) outside a field of view of the sensor unit (200),
      wherein the image sensor arrangement (130) is mounted at a sensor side (112) of the mount (110), whereby at least a portion of the image sensor arrangement (130) is received by the mount (110), and wherein the image sensor arrangement (130) and the sensor gasket (127) cooperate to fixate the optical filter (121, 122) relatively the mount (110) and to seal a peripheral portion (132) of an image sensor (131) of the image sensor arrangement (130) against the optical filter (121, 122), wherein preferably the peripheral portion (132) is outside the field of view,
      wherein the optical filter assembly (100) comprises
      a first heat conducting gasket (141) arranged between the mount (110) and the image sensor arrangement (130), wherein the first heat conducting gasket (141) is adapted to abut the mount (110) and the image sensor arrangement (130) outside the field of view,
   wherein the housing (210) comprises:
      a second heat conducting gasket (142) arranged between the housing (210, 211) and the mount (110), wherein the second heat conducting gasket (142) is adapted to abut the housing (210, 211) and the mount (110) outside the field of view.
Example 2: The sensor unit (200) according to Example 1, wherein the first heat conducting gasket (141) comprises a compressible material.
Example 3: The sensor unit (200) according to any one of the preceding Examples, wherein the second heat conducting gasket (142) comprises an elastic material.
Example 4: The sensor unit (200) according to any one of the preceding Examples, wherein the housing (210) comprises a first housing portion (211) and a second housing portion (212).
Example 5: The sensor unit (200) according to any one of the preceding Examples, wherein the image sensor arrangement (130) comprises the image sensor (131) and a circuit board (133).
Example 6: The sensor unit (200) according to any one of the preceding Examples, wherein the sensor gasket (127) is arranged to seal the peripheral portion (132) against the optical filter (121, 122), such as the second optical filter (122).
Example 7: The sensor unit (200) according to any one of the preceding Examples, wherein the optical filter (121, 122) comprises a first optical filter (121) and a second optical filter (122), wherein the sensor gasket (127) is interposed between the second optical filter (122) and the image sensor arrangement (130).
Example 8: The sensor unit (200) according to Example 7, wherein a spacer (125) is arranged between the first optical filter (121) and the second optical filter (122), wherein the spacer (125) is adapted to abut the first and second optical filters (121, 122) outside the field of view.
Example 9: A camera (300) comprising the sensor unit (200) according to any one of the preceding Examples.

## Claims

1. A sensor unit (200), wherein the sensor unit (200) comprises:
an image sensor arrangement (130) comprising an image sensor (131); and
a housing (210, 211) arranged to partially enclose an optical filter assembly (100), wherein the optical filter assembly (100) comprises
i) a mount (110) configured to receive and support
an optical filter (121, 122), and
a sensor gasket (127) arranged between the optical filter (121, 122) and the image sensor arrangement (130), wherein the sensor gasket (127) is adapted to abut the optical filter (121, 122) and the image sensor arrangement (130) outside a field of view of the sensor unit (200) to maintain a free and/or unobstructed optical path towards a light sensitive area (134) of the image sensor (131),
wherein the image sensor arrangement (130) is mounted at a sensor side (112) of the mount (110), whereby at least a portion of the image sensor arrangement (130) is received by the mount (110), and wherein the image sensor arrangement (130) and the sensor gasket (127) cooperate to fixate the optical filter (121, 122) relative to the mount (110) and to seal a peripheral portion (132) of the image sensor (131) of the image sensor arrangement (130) against the optical filter (121, 122), and
ii) a first heat conducting gasket (141) arranged between the mount (110) and the image sensor arrangement (130), wherein the first heat conducting gasket (141) is adapted to abut the mount (110) and the image sensor arrangement (130) outside the field of view to maintain a free and/or unobstructed optical path towards the light sensitive area (134) of the image sensor (131),
wherein the housing (210) comprises
a second heat conducting gasket (142) arranged between the housing (210, 211) and the mount (110), wherein the second heat conducting gasket (142) is adapted to abut the housing (210, 211) and the mount (110) outside the field of view.

2. The sensor unit of claim 1, wherein the peripheral portion (132) is outside the field of view.

3. The sensor unit (200) according to any one of the preceding claims, wherein the first heat conducting gasket (141) comprises a compressible material.

4. The sensor unit (200) according to any one of the preceding claims, wherein the second heat conducting gasket (142) comprises an elastic material.

5. The sensor unit (200) according to any one of the preceding claims, wherein the housing (210) comprises a first housing portion (211) and a second housing portion (212).

6. The sensor unit (200) according to any one of the preceding claims, wherein the image sensor arrangement (130) comprises the image sensor (131) and a circuit board (133).

7. The sensor unit (200) according to any one of the preceding claims, wherein the sensor gasket (127) is arranged to seal the peripheral portion (132) against the optical filter (121, 122).

8. The sensor unit (200) according to any one of the preceding claims, wherein the optical filter (121, 122) comprises a first optical filter (121) and a second optical filter (122), wherein the sensor gasket (127) is interposed between the second optical filter (122) and the image sensor arrangement (130).

9. The sensor unit (200) according to claim 8, wherein a spacer (125) is arranged between the first optical filter (121) and the second optical filter (122), wherein the spacer (125) is adapted to abut the first and second optical filters (121, 122) outside the field of view.

10. A camera (300) comprising a sensor unit (200) according to any one of the preceding claims.
